# NEUE EUROPÄISCHE PATENTSCHRIFT

(11) **EP 1 686 132 B2**
(45) Veröffentlichungstag und Bekanntmachung des Hinweises auf die Entscheidung über den Einspruch: **09.03.2011**
(45) Hinweis auf die Patenterteilung: 25.07.2007
(21) Anmeldenummer: 06001115.2
(22) Anmeldetag: 19.01.2006
(51) Int. Cl.: C07F 7/18

(54) **Kontinuierliches Verfahren zur Herstellung SiOC-enthaltender Verbindungen**
Continuous process for preparing SiOC containing compounds
Procédé continu d'élaboration de composés contenant des groupes SiOC

(30) Priorität: 27.01.2005 DE 102005003898
(43) Veröffentlichungstag der Anmeldung: 02.08.2006
(73) Patentinhaber: Wacker Chemie AG, 81737 München (DE)
(72) Erfinder: Schattenmann, Wolfgang, Dr., 84489 Burghausen (DE); Loher, Georg, 5280 Braunau (AT)
(74) Vertreter: Potten, Holger

(56) Entgegenhaltungen:
- EP-A- 0 065 968
- EP-A- 0 107 765
- EP-A- 0 924 215
- EP-A- 1 205 505
- EP-A- 1 205 505
- EP-A2- 0 999 215
- DE-A- 3 000 782
- DE-A1- 2 427 085
- DE-C1- 3 425 067

## Beschreibung

Die Erfindung betrifft ein kontinuierliches Verfahren zur Herstellung SiOC-enthaltender Verbindungen.

Die Herstellung von SiOC-enthaltenden Verbindungen, worunter vorzugsweise Alkoxysilane und alkoxyreiche Silikonharze zu verstehen sind, mittels Kolonnentechnologie ist seit langem bekannt. Ausgehend von Chlorsilan findet in einer Kolonne und deren Sumpf die Alkoxylierung statt. Im Falle von alkoxyreichen Siliconharzen erfolgt eine gezielte Wasserdosierung im Unterschuss bezogen auf die zudosierten SiCl-Einheiten.

In US 3792071 A1 ist ein Verfahren zur kontinuierlichen Herstellung von Alkoxysilanen oder Alkoxypolysiloxanen beschrieben, bei dem in einer Kolonne mit Rückflusskühler am Kopf Chlorsilan, im unteren Drittel gasförmiger Alkohol und an einer beliebigen Stelle Wasser zugeführt werden, wobei die Kolonnentemperatur mindestens 0,5°C über dem Sdp. des Alkohols liegt. Das aus dem unteren Ende der Kolonne ausfließende Gut wird in einem Umlaufverdampfer von Alkohol, der wieder in die Kolonne zurückgeführt wird, befreit.

Als Weiterentwicklung dieses Verfahrens wird in US 4298753 A1 ein Verfahren zur kontinuierlichen Herstellung von Alkoxysilanen oder Alkoxypolysiloxanen beschrieben, bei dem in einem ersten Reaktor (Rührkessel oder Rohreaktor auch U- oder ringförmig) mit Rückflusskühler in flüssiger Form Chlorsilan, 0,5 bis 0,9 eq. Alkohol/Si-Cl und gegebenenfalls Wasser im Gleichstrom eingeführt und vermischt werden und austretende Flüssigkeit am Kopf einer als 2. Reaktor verwendeten Kolonne eingespeist wird. Gasförmiger Alkohol für die Umsetzung der restlichen SiCl-Gruppen wird im unteren Drittel der Kolonne, neben gegebenenfalls Wasser an einer beliebigen Stelle, dosiert und das Produkt unterhalb der Alkoholzuführung entnommen.

Ein weiteres Verfahren zur kontinuierlichen Herstellung von monomeren oder oligomeren Alkoxysilanen beschreibt US 4506087 A1. In einem Reaktor und einer anschließenden Kolonne wird Chlorsilan und gegebenenfalls Wasser flüssig in den Reaktor dosiert, der Alkohol gasförmig in den unteren Teil der Kolonne und der am Kolonnenkopf austretende, kondensierte Alkohol in den Reaktor eingeleitet. Das den Reaktor verlassende Produkt wird auf den Kopf der Kolonne aufgetragen und das Endprodukt am unteren Ende der Kolonne entnommen.

Eine weitere Anmeldung zur kontinuierlichen Herstellung eines Gemisches von Organoalkoxysiloxanen ist US 6767982 B2. In einer ersten Stufe (Rührkessel oder Reaktionskolonne) wird mindestens ein Organotrichlorsilan mit Wasser (0,59 bis 0,95 mol auf Silan) und Alkohol (0,5 bis 100 mol auf Silan) bei einer Temperatur von 0 bis 150°C zur Reaktion gebracht, gleichzeitig HCl entfernt und das Rohprodukt nach einer Verweilzeit von 0,5 bis 180 min anteilig in eine Reaktions-Destillationskolonne der zweiten Verfahrensstufe überführt. In diese Kolonne wird in den unteren Teil Alkohol eingespeist und flüchtige Komponenten werden als Kopfprodukt abgeführt und im Sumpf werden bei einer Temp. von 50 bis 200°C die gewünschten Organopolysiloxane erhalten, die vom Restchlorid in einem Nachbehandlungsschritt befreit werden. Die als Kopfprodukt abgeführten flüchtigen Komponenten werden nach Kondensation in die erste Reaktionseinheit zurückgeführt.

Aus dem Stand der Technik ist ersichtlich, dass ein kontinuierliches Verfahren unter Nutzung mindestens einer Kolonneneinheit besonders vorteilhaft zur Herstellung von SiOC-enthaltenden Verbindungen ist. Die Produktivität dieser Verfahren ist jedoch durch die Durchsatzlimitierung jeder Kolonneneinheit begrenzt, wobei die Limitierung der Kolonne, in der die Hauptmenge der HCl entsteht, den gesamten Prozess limitiert. In dieser Kolonne liegt ein Stoffstrom einer flüssigen Phase (entstehendes Alkoxysilan/Teilalkoxylat) von oben nach unten und gleichzeitig ein Stoffstrom einer Gasphase (HCl) vom Entstehungsort an den Kopf der Kolonne vor. Bei einem zu starken Stoffstrom der Gasphase wird ein Druck erzeugt, der so stark ist, dass die mobile flüssige Phase nicht mehr aufgrund der Schwerkraft nach unten wandert, sondern am Kopf der Kolonne ausgetragen wird.

Aufgabe der vorliegenden Erfindung war es, die Raum-Zeit-Ausbeute eines Verfahrens zur kontinuierlichen Herstellung von SiOC-Gruppen enthaltende Verbindungen unter Nutzung zweier Kolonneneinheiten zu erhöhen.

Diese Aufgabe wurde gelöst durch ein Verfahren, bei dem ein Reaktionsgemisch in einer ersten eine Kolonne umfassenden Reaktionseinheit mit Alkohol und gegebenenfalls Wasser zu einem noch flüchtige Bestandteile enthaltenden Rohprodukt umgesetzt wird, welches in eine zweite eine Kolonne umfassende Reaktionseinheit überführt wird, in welche zudem Alkohol eingeleitet wird und dort gegebenenfalls in Anwesenheit eines nicht reaktiven organischen Lösungsmittels von den flüchtigen Bestandteilen befreit wird und das gewünschte Endprodukt am unteren Ende der zweiten Reaktionseinheit abgeführt wird, dadurch gekennzeichnet, dass in einem Vorreaktor ein Chlorsilan mit Alkohol und gegebenenfalls mit Wasser zu einem Reaktionsgemisch teilumgesetzt wird, welches in die erste Reaktionseinheit eingeführt wird, wobei der Vorreaktor aus einem Rührkessel, einem Rohrreaktor oder einem Loop-Reaktor mit oder ohne Zwangsumlauf besteht und die erste und zweite Reaktionseinheit jeweils aus einer Kolonne mit einem Umlaufverdampfer bestehen.

Durch die Verfahrensführung mit Vorreaktor wird eine deutlich höhere Raum-Zeit-Ausbeute erhalten, da ein Großteil des entstehenden, den Durchsatz der ersten Reaktionseinheit limitierenden Chlorwasserstoffs bereits im Vorreaktor gebildet und abgeführt wird und damit die nachfolgende Kolonne entlastet.

Vorzugsweise handelt es sich bei dem Alkohol und ggf. Wasser, welches im Vorreaktor zur Teilumsetzung des Chlorsilans genutzt wird, um das Destillat der zweiten Reaktionseinheit, welches als Destillat oder Gas in den Vorreaktor zurückgeführt wird. Im Vorreaktor oder vor Einleitung in den Vorreaktor kann das Destillat mit zusätzlichem Alkohol und/oder Wasser versetzt und vorzugsweise im Falle einer zusätzlichen Wasserdosierung über eine kurze Mischstrecke homogenisiert werden. Die reine Alkoxylierung im Vorreaktor ohne Kondensation im Vorreaktor ist bevorzugt.

Diese bevorzugte Ausführungsform des Verfahrens, in der das Destillat der zweiten Reaktionseinheit in den Vorreaktor gegeben wird und nicht wie üblich in die erste Reaktionseinheit, hat folgende zwei Vorteile: Erstens besitzt in der Regel der Inhalt des Sumpfes der ersten Reaktionseinheit einen hohen Anteil an flüchtigen Verbindungen, im wesentlichen Alkohol. Dieser Alkohol wird damit zusätzlich für die Reaktion im Vorreaktor benutzt. Insbesondere zeigt sich dies bei der Herstellung von Alkoxypolysiloxanen, die neben der Alkoxylierung auch noch einer Hydrolyse unterworfen sind, wie die Beispiele zeigen. Zweitens wird der zugesetzte Alkohol zweifach genutzt. Zum einen wird er in der zweiten Reaktionseinheit genutzt, um das Rohprodukt im Gegenstrom von flüchtigen Bestandteilen, insbesondere von anhaftendem Chlorwasserstoff, zu befreien und evtl. noch vorhandene Si-Cl Einheiten zur Nachreaktion zu bringen. Zum anderen wird der Alkohol gleichzeitig genutzt, um als Reaktionspartner im Vorreaktor zur Verfügung zu stehen und somit die Reaktionseinheit 1 zu entlasten.

Als Chlorsilane werden vorzugsweise solche Chlorsilane eingesetzt, die bereits bisher zur Herstellung von Alkoxysilanen bzw. Organopolysiloxanen durch Umsetzung von Chlorsilan mit Alkoholen und gegebenenfalls Wasser eingesetzt worden sind. Es sind dies insbesondere Verbindungen der allgemeinen Formel

RₙSiCl₄₋ₙ

wobei
n = 0-3 sein kann und
wobei
R Wasserstoff oder monovalenter, gleicher oder verschiedener, substituierter oder nicht substituierter organischer Rest bedeutet.

Beispiele für R sind Wasserstoff und Kohlenwasserstoffreste, wie Methyl-, Ethyl-, Vinyl-, n-Propyl-, i-Propyl, Allyl-, n-Butyl, i-Butyl, n-Pentyl-, i-Pentyl, n-Hexyl, i-Hexyl-, Cyclohexyl, n-Heptyl-, n-Octyl, i-Octyl-, Hexadecyl-, Octadecyl-, Phenyl- und Tolylreste; ferner substituierte Kohlenwasserstoffreste, bei denen die Kohlenstoffatome, an die Halogen gebunden ist, in alpha-Stellung oder mindestens in gamma-Stellung zum Si-Atom stehen, z. B. der gamma-Chlorpropylrest; und Halogenarylreste, z. B. Chlorphenylreste. Weitere Beispiele für geeignete substituierte Kohlenwasserstoffreste sind der beta-Cyanethylrest und der gamma-Acryloxypropylrest sowie der gamma-Methacryloxypropylrest.

Bevorzugt sind Kohlenwasserstoffreste, wie Methyl-, Ethyl-, Vinyl-, n-Propyl-, i-Propyl, n-Butyl, i-Butyl, n-Pentyl-, i-Pentyl, n-Hexyl, i-Hexyl-, Cyclohexyl, n-Heptyl-, n-Octyl, i-Octyl-, Hexadecyl-, Octadecyl-, Phenyl- und Tolylreste. Besonders bevorzugt sind Kohlenwasserstoffreste, wie Methyl-, Vinyl-, n-Propyl-, n-Butyl, i-Octyl, und Phenylreste.
Es können auch Gemische verschiedener Chlorsilane eingesetzt werden.

Als Alkohol werden vorzugsweise solche Kohlenwasserstoffverbindungen mit einer alkoholischen Hydroxylgruppe eingesetzt, die bereits bisher zur Herstellung von Alkoxysilanen bzw. Organopolysiloxanen durch Umsetzung von Chlorsilan mit Alkoholen und gegebenenfalls Wasser verwendet worden sind, deren Siedepunkt unter dem des jeweils herzustellenden Alkoxysilanen bzw. Organopolysiloxanen liegt. Bevorzugt sind Alkanole und durch ein Ethersauerstoffatom substituierte Alkanole mit jeweils 1 bis 6 Kohlenstoffatomen, wie Methanol, Ethanol, beta-Methoxyethanol, n-Propanol, iso-Propanol, n-Butanol oder n-Hexanol. Besonders bevorzugt sind Methanol, Ethanol, Iso-Propanol oder n-Buthanol. Es können auch Gemische verschiedener Alkohole eingesetzt werden.

Gegebenenfalls wird zweckmäßigerweise auch ein organisches Lösungsmittel miteinbezogen. Als Lösungsmittel bieten sich alle organischen Lösungsmittel an. Bevorzugt werden nicht reaktive organische Lösungmittel eingesetzt, wie z. B. Toluol oder Xylol.

Der im Verfahren entstehende Chlorwasserstoff wird vorzugsweise am Kopf des Vorreaktors und am Kopf der ersten Reaktionseinheit jeweils von den kondensierbaren Anteilen befreit, die ihrerseits wieder in die entsprechende Reaktionseinheit zurückgeführt werden. Der Chlorwasserstoff steht damit als Gas für eine Rückgewinnung zur Verfügung.

Im Falle einer reinen Alkoxylierungsreaktion ist ein Zwangsumlauf nicht notwendig, da bereits der bei der Reaktion entstehende Chlorwasserstoff ausreicht, um einen hinreichenden Umlauf und eine Durchmischung zu gewährleisten. Im Falle einer zusätzlichen Wasserdosierung ist ein Zwangsumlauf bevorzugt und ein Vorreaktor mit hoher Durchmischungstendenz, wie z. B. Loop-Reaktor, besonders bevorzugt.

In den Vorreaktor wird vorzugsweise ein flüssiges Chlorsilan gegeben, wobei maximal 80% der molar Si-gebundenen Chloreinheiten mit alkoholischen Hydroxygruppen und ggf. Wasser im Vorreaktor zur Reaktion gebracht werden.

Der Vorreaktor wird bevorzugt bei einer Temperatur unterhalb des Siedepunkts des eingesetzten Chlorsilans oder der eingesetzten Chlorsilanmischung betrieben.

Das teilumgesetzte Reaktionsgemisch wird in die Kolonne einer ersten Reaktionseinheit überführt, in der eine weitere Vermischung und Umsetzung von Chlorsilan, Alkohol und ggf. Wasser zu Chlorwasserstoffgas und einem flüssigen Rohprodukt erfolgt. Dies kann beispielsweise mittels einer Überlaufvorrichtung geschehen.

Bevorzugt übersteigt die Temperatur in der Kolonne der Reaktionseinheit 1 120°C nicht. Besonders bevorzugt übersteigt die Temperatur in der Kolonne 100°C nicht.

Das flüssige Rohprodukt wird in eine als 2. Reaktionseinheit verwendete Kolonne eingeführt. In die zweite Kolonne wird im unteren Drittel Alkohol gegeben, um das Rohprodukt im Gegenstrom von flüchtigen Bestandteilen, insbesondere von anhaftendem Chlorwasserstoff, zu befreien und evtl. noch vorhandene Si-Cl Einheiten zur Nachreaktion zu bringen.

Die Temperatur in der zweiten Reaktionseinheit ist nur begrenzt durch Stabilität und Siedepunkte der entstehenden SiOC-Verbindungen, die Menge und den Siedepunkt des zur Strippung verwendeten Alkohols und im Falle der Anwesenheit eines Lösungsmittels durch dessen Siedetemperatur.

Der Alkohol kann prinzipiell in alle Reaktionseinheiten gegeben werden. Vorzugsweise wird die Hauptmenge an Alkohol in die zweite Kolonne gegeben, um das Rohprodukt im Gegenstrom von flüchtigen Bestandteilen, insbesondere von anhaftendem Chlorwasserstoff, zu befreien und evtl. noch vorhandene Si-Cl Einheiten zur Nachreaktion zu bringen. Vorzugsweise wird dieser Alkohol am Kopf der zweiten Kolonne abgezogen, kondensiert und das Destillat anschließend in den Vorreaktor dosiert.

Vorzugsweise wird der Sumpf der ersten Reaktionseinheit kontinuierlich, zweckmäßigerweise möglichst in der Nähe des Kopfes der zweiten Reaktionskolonne zudosiert.

Im folgenden wird die Durchführung des erfindungsgemäßen Verfahrens beispielhaft an einer Apparatur beschrieben, welche auch in den folgenden Beispielen eingesetzt wurde:

Die Anlage umfasst einen Vorreaktor und zwei Kolonnen, jeweils mit einem Umlaufverdampfer. Der Vorreaktor ist ein Loopreaktor mit einer mit einem Ventil regelbaren Kreiselpumpe, die den flüssigen Inhalt mit maximaler Turbulenz umpumpt.

In den Vorreaktor wird an der unteren Seite das Chlorsilan und das Destillat der zweiten Reaktionseinheit zudosiert. In das Destillat wird gegebenenfalls Alkohol und Wasser zudosiert, welches über eine kurze Mischstrecke homogenisiert wird. Der Inhalt des Vorreaktors wird mittels einer Überlaufvorrichtung in die erste Reaktionseinheit gegeben. Der Vorreaktor besitzt an der Oberseite einen Auslass für das entstehende Chlorwasserstoffgas. Dieses Gas wird mittels eines Wasserkühlers und anschließend eines Solekühlers von kondensierbaren Anteilen befreit, wobei die kondensierbaren Anteile direkt wieder in den Vorreaktor zurückgeführt werden. Das nach dem Kühler enthaltene Chlorwasserstoffgas kann zurückgewonnen werden oder an einem Wäscher in Wasser gelöst und als HCl saure Lösung entsorgt werden. Die beiden nachfolgenden Reaktionseinheiten bestehen jeweils aus einem Umlaufverdampfer und einer darauf aufgesetzten Kolonne. Die Kolonne der ersten Reaktionseinheit besitzt oben zunächst einen wasserbetriebenen Kühler und anschließend einen solebetriebenen Kühler. Die dort erhaltenen Destillate werden in die erste Kolonne zurückgespeist. Das nach dem Kühler erhaltene Chlorwasserstoffgas kann zurückgewonnen werden oder an einem Wäscher in Wasser gelöst und als HCl saure Lösung entsorgt werden. Die Kolonne der zweiten Reaktionseinheit besitzt oben einen wasserbetriebenen Kühler. Die dort kondensierten flüchtigen Bestandteile werden inklusive dem Gas wie beschrieben in den Vorreaktor zurückgeführt.

Aus dem Umlaufverdampfer der ersten Reaktionseinheit wird kontinuierlich mittels einer Kreiselpumpe so viel Reaktionsgemisch ausgetragen, wie durch die Reaktion erhalten wird. Das Reaktionsgemisch aus dem Umlaufverdampfer der ersten Reaktionseinheit wird auf dem Kopf direkt unterhalb der Kondensationseinheit der zweiten Kolonne gegeben.
Aus dem Umlaufverdampfer der zweiten Reaktionseinheit wird ebenfalls mittels einer Kreiselpumpe in dem Maße Produkt entfernt, in dem es gebildet wurde.

Die folgenden Beispiele dienen der weiteren Erläuterung der Erfindung.

### Beispiel 1:

Der Vorreaktor mit einem Füllvolumen von 2L wird mit 2L Me-SiCl₃ (Me= Methyl) befüllt.
Der 2,5L große Umlaufverdampfer der ersten Reaktionseinheit mit einer aufgesetzten 5m langen Kolonne mit einer lichten Weite von 50mm wird folgendermaßen befüllt:
2,250L des gewünschten Alkoxypolysiloxans, bestehend aus Me-SiO_{3/2} Einheiten mit einem Ethoxygehalt von 29 Gew% 250 ml Ethanol
Der 2,0L große Umlaufverdampfer der zweiten Reaktionseinheit mit einer aufgesetzten 5m langen Kolonne mit einer lichten Weite von 50mm wird folgendermaßen befüllt:
1,800L des gewünschten Alkoxypolysiloxans, bestehend aus Me-SiO_{3/2} Einheiten mit einem Ethoxygehalt von 29 Gew% 200 ml Ethanol
Das Chlorsilan im Vorreaktor wird umgepumpt und auf 34°C erwärmt. Die beiden Kolonnen enthaltenden Reaktionseinheiten werden mittels der Umlaufverdampfer erhitzt, bis die Kondensation am Kopf der zweiten Kolonne beginnt. Anschließend werden die kontinuierlichen Dosierungen folgendermaßen gestartet:
In den Vorreaktor wird 2000 g/h MeSiCl₃ zugespeist. Knapp oberhalb des Umlaufverdampfers der ersten Reaktionseinheit werden 258 g/h Wasser und Ethanol in dem Maße zugespeist, so dass ein konstantes Temperaturprofil (von 62-73°C) in der Kolonne erhalten wird (üblicherweise: ca. 300 ml/h). Die Temperatur im Vorreaktor wird konstant auf 30-34°C gehalten.
Im Sumpf der Reaktionseinheit 1 befindet sich eine Temperatur von ca. 77°C. Das Rohprodukt wird im Maße seiner Bildung stetig aus dem Umlaufverdampfer entnommen und auf den Kopf unterhalb der Kondensationseinheiten des Reaktors 2 zugespeist.
Die Temperatur in der Kolonne des Reaktors 2 wird bei ca. 73-79°C gehalten. Die Temperatur im Umlaufverdampfer des Reaktors 2 liegt bei ca. 173°C. Das Kondensat aus der Reaktoreinheit 2 wird in den Vorreaktor am Boden nach der Umwälzpumpe auf der Druckseite zugespeist. Ca. 1m oberhalb des Umlaufverdampfers der Reaktionseinheit 2 werden 400 ml/h Ethanol zudosiert.
Aus dem Umlaufverdampfer des Reaktors 2 wird kontinuierlich ein klares Produkt abgenommen. Zur Bestimmung der Harzqualität dieses Rohproduktes wurde mit Siliconharz-üblichen Methoden aufgearbeitet. Die Analytik des erhaltenen Siliconharzes ergab eine Viskosität von 25,4 mm²/s bei 25°C, einen Ethoxygehalt von 29,2 % (das entspricht einem molaren Umsatz der eingesetzten Si-Cl zu Si-OEt von 24,9 %) und ein Molekulargewicht Mw von 3000 g/mol. (Et= Ethyl)

Aus dem Vorreaktor wurden während der kontinuierlichen Reaktion regelmäßig Proben genommen, um den im Vorreaktor erzielten SiCl-Umsatz zu bestimmen. Die Analyse wurde mittels NMR-Spektroskopie durchgeführt und gab bezüglich der Si-Cl, Si-O_{1/2} und Si-OEt folgende molare Verhältnisse: Si-Cl / Si-OEt/ Si-O_{1/2} = 46,9 / 52,6 / 0,5. Die Analyse des Vorreaktors zeigt beispielhaft den besonderen Vorteil der erfindungsgemäßen Reaktionsführung, das Destillat der zweiten Reaktionseinheit in den Vorreaktor zu geben. Aufgrund der Stöchiometrie des Endproduktes könnte die maximal mögliche Alkoxylierung im Vorreaktor ohne eine Destillatzugabe der zweiten Reaktionseinheit nicht mehr als 24,9 mol% (Anteil an Si-OEt Einheiten bezogen auf gesamten SiCl-Umsatz) betragen, wobei hierbei sogar noch der Alkohol, der zur Steuerung der ersten Kolonne und zur Nachreaktion und HCl-Austrag in der zweiten Kolonne benötigt wird, mit eingerechnet wurde. Dadurch dass jedoch in dieser bevorzugten Ausführungsform der Erfindung das Destillat der zweiten Reaktionseinheit miteinbezogen wird, kann ohne Kondensation bereits ein hoher SiCl-Umsatz (größer 50%) erreicht werden. Die reine Alkoxylierung im Vorreaktor ohne Kondensation ist aufgrund der angenehmeren Reaktionsführung bevorzugt. Durch dieses Vorreaktorkonzept ist damit bezogen auf HCl-Abführung eine um den Faktor 2 erhöhte Kapazität ausschließlich über Alkoxylierung geschaffen worden.

### Beispiel 2

Der Vorreaktor wird mit 2L MeSiCl₃ befüllt.

Der 2,5L große Umlaufverdampfer der ersten Reaktionseinheit wird folgendermaßen befüllt:
2,250L des gewünschten Alkoxypolysiloxans, bestehend aus Me-SiO_{3/2} Einheiten mit einem Ethoxygehalt von 29 Gew% 250 mL Ethanol
Der 2,0L große Umlaufverdampfer der zweiten Reaktionseinheit wird folgendermaßen befüllt:
1800 ml des gewünschten Alkoxypolysiloxans, bestehend aus Me-SiO_{3/2} Einheiten mit einem Ethoxygehalt von 29 Gew% 200 ml Ethanol

Das Chlorsilan im Vorreaktor wird umgepumpt und hat 34°C. Die beiden Kolonnen enthaltenden Reaktionseinheiten werden mittels der Umlaufverdampfer erhitzt, bis die Kondensation am Kopf der zweiten Kolonne beginnt. Anschließend werden die kontinuierlichen Dosierungen folgendermaßen gestartet:
In den Vorreaktor wird 2000 g/h MeSiCl₃ zugespeist. Knapp oberhalb des Umlaufverdampfers der ersten Reaktionseinheit werden 215 g/h Wasser und Ethanol in dem Maße zugespeist, so dass ein konstantes Temperaturprofil (von 66-74°C) in der Kolonne erhalten wird (üblicherweise: ca. 300ml/h). In den Destillatstrom von der zweiten Reaktionseinheit in den Vorreaktor werden 39 g/h Ethanol und 51 g/h Wasser gegeben.
Die Temperatur im Vorreaktor wird konstant auf 33°C gehalten. Im Sumpf der Reaktionseinheit 1 befindet sich eine Temperatur von ca. 77°C. Das Rohprodukt wird im Maße seiner Bildung stetig aus dem Umlaufverdampfer entnommen und auf den Kopf unterhalb der Kondensationseinheiten des Reaktors 2 zugespeist.
Die Temperatur in der Kolonne des Reaktors 2 wird bei ca. 65-78°C gehalten. Die Temperatur im Umlaufverdampfer des Reaktors 2 liegt bei ca. 175°C. Das Kondensat aus der Reaktoreinheit 2 wird in den Vorreaktor am Boden nach der Umwälzpumpe auf der Druckseite zugespeist. Ca 1m oberhalb des Umlaufverdampfers der Reaktionseinheit 2 werden 200 ml/h Ethanol zudosiert.
Aus dem Umlaufverdampfer des Reaktors 2 wird kontinuierlich eine klares Produkt abgenommen. Zur Bestimmung der Harzqualität dieses Rohproduktes wurde mit Siliconharz-üblichen Methoden aufgearbeitet. Die Analytik des erhaltenen Siliconharzes ergab eine Viskosität von 21 mm²/s, einen Ethoxygehalt von 28,2 Gew% (das entspricht einem molaren Umsatz der eingesetzten Si-Cl zu Si-OEt von 23,7 %) und ein Molekulargewicht Mw von 1800 g/mol.

Aus dem Vorreaktor wurden während der kontinuierlichen Reaktion regelmäßig Proben genommen, um den im Vorreaktor erzielten SiCl-Umsatz zu bestimmen. Die Analyse wurde mittels NMR-Spektroskopie durchgeführt und gab bezüglich der Si-Cl, Si-O_{1/2} und Si-OEt folgende molare Verhältnisse: Si-Cl / Si-OEt/ Si-O_{1/2}= 36,5 / 52,5 / 11,0. Die Analyse des Vorreaktors zeigt auch hier wiederum den besonderen Vorteil dieser Reaktionsführung, das Destillat der zweiten Reaktionseinheit in den Vorreaktor zu geben. Aufgrund der Stöchiometrie des Endproduktes könnte die maximal mögliche Alkoxylierung im Vorreaktor ohne eine Destillatzugabe der zweiten Reaktionseinheit nicht mehr als 23,7 mol% (Anteil an Si-OEt Einheiten bezogen auf gesamten SiCl-Umsatz) betragen, wobei hierbei sogar noch der Alkohol, der zur Steuerung der ersten Kolonne und zur Nachreaktion und HCl-Austrag in der zweiten Kolonne benötigt wird, mit eingerechnet wurde. Dadurch, dass jedoch hierbei das Destillat der zweiten Reaktionseinheit miteinbezogen wird, kann ohne Kondensation bereits ein hoher SiCl-Umsatz (größer 50%; wie in Beispiel 1) ausschließlich durch Alkoxylierung erreicht werden. Durch die Kombination der Alkoxylierung mit partieller Kondensation konnte die nachfolgende Kolonne nahezu um 2/3 bezogen auf HCl-Abführung entlastet werden.

### Beispiel 3

Der Vorreaktor wird mit 2L eines Silangemisches bestehend aus PhSiCl₃ und Me₂SiCl₂ im molaren Verhältnis von PhSiCl₃ / Me₂SiCl₂ = 2 / 1 befüllt. (Ph= Phenyl)
Der 2,5L große Umlaufverdampfer der ersten Reaktionseinheit wird folgendermaßen befüllt:
800 mL des gewünschten Alkoxypolysiloxans, bestehend aus PhSiO_{3/2} und Me₂SiO_{2/2} Einheiten im Verhältnis 62/38 mit einem Methoxygehalt von 10 Gew% und einem Butoxygehalt von 5 Gew% 800 ml Methanol
   800 ml Toluol
Der 2,0L große Umlaufverdampfer der zweiten Reaktionseinheit wird folgendermaßen befüllt:
1800ml des gewünschten Alkoxypolysiloxans, bestehend aus PhSiO_{3/2} und Me₂SiO_{2/2} Einheiten im Verhältnis 62/38 mit einem Methoxygehalt von 10 Gew% und einem Butoxygehalt von 5 Gew% 200 ml Toluol

Das Chlorsilan im Vorreaktor wird umgepumpt und die Temperatur bei 20°C gehalten. Die beiden Kolonnen enthaltenden Reaktionseinheiten werden mittels der Umlaufverdampfer erhitzt, bis die Kondensation am Kopf der zweiten Kolonne beginnt. Anschließend werden die kontinuierlichen Dosierungen folgendermaßen gestartet:
In den Vorreaktor wird 2592 g/h eines Silangemisches bestehend aus PhSiCl₃ und Me₂SiCl₂ im molaren Verhältnis von PhSiCl₃ / Me₂SiCl₂ = 2 / 1 zugespeist. Knapp oberhalb des Umlaufverdampfers der ersten Reaktionseinheit werden 245 g/h Wasser und Methanol in dem Maße zugespeist, so dass ein konstantes Temperaturprofil (von 42-55°C) in der Kolonne erhalten wird (üblicherweise: ca. 50 ml/h). In den Destillatstrom von der zweiten Reaktionseinheit in den Vorreaktor werden 160ml/h Butanol gegeben.
Die Temperatur im Vorreaktor wird konstant auf 27°C gehalten. Im Sumpf der Reaktionseinheit 1 befindet sich eine Temperatur von ca 67°C. Das Rohprodukt wird im Maße seiner Bildung stetig aus dem Umlaufverdampfer entnommen und auf den Kopf unterhalb der Kondensationseinheiten des Reaktors 2 zugespeist.
Die Temperatur in der Kolonne des Reaktors 2 wird bei ca. 70-97°C gehalten. Die Temperatur im Umlaufverdampfer des Reaktors 2 liegt bei ca. 180°C. Das Kondensat aus der Reaktoreinheit 2 wird in den Vorreaktor am Boden nach der Umwälzpumpe auf der Druckseite zugespeist. Ca 1m oberhalb des Umlaufverdampfers der Reaktionseinheit 2 werden 250 ml/h Methanol und 100 ml/h Toluol zudosiert.
Aus dem Umlaufverdampfer des Reaktors 2 wird kontinuierlich ein klares Produkt abgenommen. Zur Bestimmung der Harzqualität dieses Rohproduktes wurde mit Siliconharz-üblichen Methoden aufgearbeitet. Die Analytik des erhaltenen Siliconharzes ergab eine Viskosität von 83 mm²/s, einen Methoxygehalt von 9,8 Gew% und einen Butoxygehalt von 5,1 Gew% (das entspricht einem molaren Umsatz der eingesetzten Si-Cl zu Si-OR von 24,4 %), ein PhSi/Me₂Si - Verhältnis von 61,6 / 38,4 und ein Molekulargewicht Mw von 1300 g/mol.
Aus dem Vorreaktor wurden während der kontinuierlichen Reaktion regelmäßig Proben genommen, um den im Vorreaktor erzielten SiCl-Umsatz zu bestimmen. Die Analyse wurde mittels NMR-Spektroskopie durchgeführt und gab bezüglich der Si-Cl, Si-O_{1/2} und Si-OR folgende molare Verhältnisse: Si-Cl / Si-OR/ Si-O_{1/2} = 62,6 / 37,2 / 0,2. Die Analyse des Vorreaktors zeigt den besonderen Vorteil dieser Reaktionsführung, das Destillat der zweiten Reaktionseinheit in den Vorreaktor zu geben. Aufgrund der Stöchiometrie des Endproduktes könnte die maximal mögliche Alkoxylierung im Vorreaktor ohne eine Destillatzugabe der zweiten Reaktionseinheit nicht mehr als 24,4 mol% (Anteil an Si-OR Einheiten bezogen auf gesamten SiC1-Umsatz) betragen, wobei hierbei sogar noch der Alkohol, der zur Steuerung der ersten Kolonne und zur Nachreaktion und HCl-Austrag in der zweiten Kolonne benötigt wird, mit eingerechnet wurde. Dadurch, dass jedoch hierbei das Destillat der zweiten Reaktionseinheit miteinbezogen wird, kann ohne Kondensation bereits ein hoher SiCl-Umsatz erreicht werden. Die reine Alkoxylierung im Vorreaktor ohne Kondensation im Vorreaktor ist aufgrund der angenehmeren Reaktionsführung bevorzugt. Durch dieses Vorreaktorkonzept ist damit bezogen auf HCl-Abführung eine um 37 % erhöhte Kapazität ausschließlich über Alkoxylierung geschaffen worden.

### Beispiel 4

Der Vorreaktor wird mit 2L eines Silangemisches bestehend aus PhSiCl₃ und Me₂SiCl₂ im molaren Verhältnis von PhSiCl₃ / Me₂SiCl₂ = 2 / 1 befüllt.
Der 2,5L große Umlaufverdampfer der ersten Reaktionseinheit wird folgendermaßen befüllt:
800 ml des gewünschten Alkoxypolysiloxans, bestehend aus PhSiO_{3/2} und Me₂SiO_{2/2} Einheiten im Verhältnis 61/39 mit einem Methoxygehalt von 10 Gew% und einem Butoxygehalt von 5 Gew% 800 ml Methanol
   800 ml Toluol
Der 2,0L große Umlaufverdampfer der zweiten Reaktionseinheit wird folgendermaßen befüllt:
1800ml des gewünschten Alkoxypolysiloxans, bestehend aus PhSiO_{3/2} und Me₂SiO_{2/2} Einheiten im Verhältnis 61/39 mit einem Methoxygehalt von 10 Gew% und einem Butoxygehalt von 5 Gew% 200 ml Toluol

Das Chlorsilan im Vorreaktor wird umgepumpt und die Temperatur bei 26°C gehalten. Die beiden Kolonnen enthaltenden Reaktionseinheiten werden mittels der Umlaufverdampfer erhitzt, bis die Kondensation am Kopf der zweiten Kolonne beginnt. Anschließend werden die kontinuierlichen Dosierungen folgendermaßen gestartet:
In den Vorreaktor wird 2592 g/h eines Silangemisches bestehend aus PhSiCl₃ und Me₂SiCl₂ im molaren Verhältnis von PhSiCl₃ / Me₂SiCl₂ = 2 / 1 zugespeist. Knapp oberhalb des Umlaufverdampfers der ersten Reaktionseinheit werden 170 g/h Wasser und Methanol in dem Maße zugespeist, so dass ein konstantes Temperaturprofil (von 54-43°C) in der Kolonne erhalten wird (üblicherweise: ca. 70 ml/h). In den Destillatstrom von der zweiten Reaktionseinheit in den Vorreaktor werden 75 g/h Wasser und 160 ml/h Butanol gegeben.
Die Temperatur im Vorreaktor wird konstant auf 26°C gehalten. Im Sumpf der Reaktionseinheit 1 befindet sich eine Temperatur von ca 69°C. Das Rohprodukt wird im Maße seiner Bildung stetig aus dem Umlaufverdampfer entnommen und auf den Kopf unterhalb der Kondensationseinheiten des Reaktors 2 zugespeist.
Die Temperatur in der Kolonne des Reaktors 2 wird bei ca. 66-95°C gehalten. Die Temperatur im Umlaufverdampfer des Reaktors 2 liegt bei ca. 182°C. Das Kondensat aus der Reaktoreinheit 2 wird in den Vorreaktor am Boden nach der Umwälzpumpe auf der Druckseite zugespeist. Ca 1m oberhalb des Umlaufverdampfers der Reaktionseinheit 2 werden 260ml/h Methanol und 140ml/h Toluol zudosiert.
Aus dem Umlaufverdampfer des Reaktors 2 wird kontinuierlich eine klares Produkt abgenommen. Zur Bestimmung der Harzqualität dieses Rohproduktes wurde mit Siliconharz-üblichen Methoden aufgearbeitet. Die Analytik des erhaltenen Siliconharzes ergab eine Viskosität von 98 mm²/s, einen Methoxygehalt von 9,7 Gew% und einen Butoxygehalt von 4,4 Gew% (das entspricht einem molaren Umsatz der eingesetzten Si-Cl zu Si-OMe von 23,4 %), ein PhSi/Me₂Si - Verhältnis von 60,2 / 39,8 und ein Molekulargewicht Mw von 1400 g/mol.
Aus dem Vorreaktor wurden während der kontinuierlichen Reaktion regelmäßig Proben genommen, um den im Vorreaktor erzielten SiCl-Umsatz zu bestimmen. Die Analyse wurde mittels NMR-Spektroskopie durchgeführt und gab bezüglich der Si-Cl, Si-O_{1/2} und Si-OMe folgende molare Verhältnisse: Si-Cl / Si-OMe/ Si-O_{1/2} = 43,3 / 37,8 / 18,9. Die Analyse des Vorreaktors zeigt den besonderen Vorteil dieser Reaktionsführung, das Destillat der zweiten Reaktionseinheit in den Vorreaktor zu geben. Aufgrund der Stöchiometrie des Endproduktes könnte die maximal mögliche Alkoxylierung im Vorreaktor ohne eine Destillatzugabe der zweiten Reaktionseinheit nicht mehr als 23,4 mol% (Anteil an Si-OMe Einheiten bezogen auf gesamten SiCl-Umsatz) betragen, wobei hierbei sogar noch der Alkohol, der zur Steuerung der ersten Kolonne und zur Nachreaktion und HCl-Austrag in der zweiten Kolonne benötigt wird, mit eingerechnet wurde. Dadurch, dass jedoch hierbei das Destillat der zweiten Reaktionseinheit miteinbezogen wird, kann ohne Kondensation bereits ein hoher SiC1-Umsatz (größer 37%; wie in Beispiel 3) ausschließlich durch Alkoxylierung erreicht werden. Durch die Kombination der Alkoxylierung mit partieller Kondensation konnte die nachfolgende Kolonne um über 55 % bezogen auf HCl-Abführung entlastet werden.

### Beispiel 5

Der Vorreaktor wird mit 2L PhSiCl₃ befüllt.
Der 2,5L große Umlaufverdampfer der ersten Reaktionseinheit wird folgendermaßen befüllt:
1,800ml von Phenyltriethoxysilan
700 ml Ethanol
Der 2,0L große Umlaufverdampfer der zweiten Reaktionseinheit wird folgendermaßen befüllt:
1800ml von Phenyltriethoxysilan
200 ml Ethanol

Das Chlorsilan im Vorreaktor wird umgepumpt und auf 50°C erwärmt. Die beiden Kolonnen enthaltenden Reaktionseinheiten werden mittels der Umlaufverdampfer erhitzt, bis die Kondensation am Kopf der zweiten Kolonne beginnt. Anschließend werden die kontinuierlichen Dosierungen folgendermaßen gestartet:
In den Vorreaktor wird 2500 g/h von PhSiCl₃ zugespeist. Knapp oberhalb des Umlaufverdampfers der ersten Reaktionseinheit werden ca. 650 ml/h Ethanol zugespeist. Es wird ein konstantes Temperaturprofil (von 50-75°C) in der Kolonne erhalten. In den Destillatstrom von der zweiten Reaktionseinheit in den Vorreaktor werden 1000 ml/h Ethanol gegeben

Die Temperatur im Vorreaktor wird konstant auf 42°C gehalten. Im Sumpf der Reaktionseinheit 1 befindet sich eine Temperatur von ca. 132°C. Das Rohprodukt wird im Maße seiner Bildung stetig aus dem Umlaufverdampfer entnommen und auf den Kopf unterhalb der Kondensationseinheiten des Reaktors 2 zugespeist.
Die Temperatur in der Kolonne des Reaktors 2 wird bei ca. 75-80°C gehalten. Die Temperatur im Umlaufverdampfer des Reaktors 2 liegt bei ca. 182°C. Das Kondensat aus der Reaktoreinheit 2 wird in den Vorreaktor am Boden nach der Umwälzpumpe auf der Druckseite zugespeist. Ca. 1m oberhalb des Umlaufverdampfers der Reaktionseinheit 2 werden 500 ml/h Ethanol zudosiert.
Aus dem Umlaufverdampfer des Reaktors 2 wird kontinuierlich das klare Phenyltriethoxysilan abgenommen, das noch ca. 1 ppm HCl enthält.
Zur Bestimmung der Silanqualität wurden GC und NMR Analysen durchgeführt. Es besitzt eine Reinheit von 99,6 %. 0,4 % werden Dimer festgestellt.
Aus dem Vorreaktor wurden während der kontinuierlichen Reaktion regelmäßig Proben genommen, um den im Vorreaktor erzielten SiCl-Umsatz zu bestimmen. Die Analyse wurde mittels NMR-Spektroskopie durchgeführt und gab bezüglich der Si-Cl, Si-O_{1/2} und Si-OEt folgende Verhältnisse: Si-Cl / Si-OEt/ Si-O_{1/2} = 30,2 / 69,5 / 0,3. Durch den Vorreaktor konnte die nachfolgende Kolonne um fast 70 % bezogen auf HCl-Abführung entlastet werden.

## Patentansprüche

1. Verfahren zur kontinuierlichen Herstellung von SiOC-Gruppen enthaltende Verbindungen, bei dem ein Reaktionsgemisch in einer ersten eine Kolonne umfassenden Reaktionseinheit mit Alkohol und gegebenenfalls Wasser zu einem noch flüchtige Bestandteile enthaltenden Rohprodukt umgesetzt wird, welches in eine zweite eine Kolonne umfassende Reaktionseinheit überführt wird, in welche zudem Alkohol eingeleitet wird und dort gegebenenfalls in Anwesenheit eines nicht reaktiven organischen Lösungsmittels von den flüchtigen Bestandteilen befreit wird und das gewünschte Endprodukt am unteren Ende der zweiten Reaktionseinheit abgeführt wird, wobei in einem Vorreaktor ein Chlorsilan mit Alkohol und gegebenenfalls mit Wasser zu einem Reaktionsgemisch teilumgesetzt wird, welches in die erste Reaktionseinheit eingeführt wird, und wobei der Vorreaktor aus einem Rührkessel, einem Rohrreaktor oder einem Loop-Reaktor besteht und die erste und zweite Reaktionseinheit jeweils aus einer Kolonne mit einem Umlaufverdampfer bestehen.

2. Verfahren nach Anspruch 1 **dadurch gekennzeichnet, dass** der Alkohol und ggf. das Wasser, welches im Vorreaktor zur Teilumsetzung des Chlorsilans genutzt wird, das Destillat der zweiten Reaktionseinheit umfasst, welches flüssig oder gasförmig in den Vorreaktor zurückgeführt wird.

3. Verfahren nach Anspruch 2 **dadurch gekennzeichnet, dass** das Destillat im Vorreaktor oder vor Einleitung in den Vorreaktor mit zusätzlichem Alkohol und/oder Wasser versetzt wird.

4. Verfahren nach einem der Ansprüche 1 bis 3 **dadurch gekennzeichnet, dass** das Chlorsilan eine Verbindungen der allgemeinen Formel
RₙSiCl₄₋ₙ
ist, wobei
n = 0-3 sein kann und wobei
R Wasserstoff oder monovalenter, gleicher oder verschiedener, substituierter oder nicht substituierter organischer Rest bedeutet.

5. Verfahren nach einem der Ansprüche 1 bis 4 **dadurch gekennzeichnet, dass** der Alkohol ein Alkanol oder ein Ethersauerstoffatom substituierter Alkanol mit 1 bis 6 Kohlenstoffatomen ist.

6. Verfahren nach einem der Ansprüche 1 bis 5 **dadurch gekennzeichnet, dass** als Lösungsmittel ein nicht reaktives organisches Lösungsmittel, wie z. B. Toluol oder Xylol, eingesetzt wird.

7. Verfahren nach einem der Ansprüche 1 bis 6 **dadurch gekennzeichnet, dass** das Reaktionsgemisch in die Kolonne einer ersten Reaktionseinheit überführt wird, in der eine weitere Vermischung und Umsetzung von Chlorsilan, Alkohol und ggf. Wasser zu Chlorwasserstoffgas und einem flüssigen Rohprodukt erfolgt und das flüssige Rohprodukt kontinuierlich in eine als 2. Reaktionseinheit verwendete Kolonne eingeführt wird, in deren unteres Drittel ein Alkohol gegeben wird.

## Claims

1. Process for continuously preparing compounds containing SiOC groups, in which a reaction mixture, in a first reaction unit comprising a column, is reacted with alcohol and optionally water to give a crude product which still comprises volatile constituents and is transferred to a second reaction unit comprising a column in which alcohol is additionally introduced and freed there of the volatile constituents, optionally in the presence of an unreactive organic solvent, and the desired end product is removed at the lower end of the second reaction unit, wherein, in a prereactor, a chlorosilane is reacted partially with alcohol and optionally with water to give a reaction mixture which is introduced into the first reaction unit, and wherein the prereactor consists of a stirred tank, a tubular reactor or a loop reactor, and the first and second reaction unit each consist of a column with a circulation evaporator.

2. Process according to Claim 1, **characterized in that** the alcohol and optionally the water which is utilized in the prereactor to partially react the chlorosilane comprises the distillate of the second reaction unit which is recycled into the prereactor in liquid or gaseous form.

3. Process according to Claim 2, **characterized in that** the distillate is admixed with additional alcohol and/or water in the prereactor or before introduction into the prereactor.

4. Process according to one of Claims 1 to 3, **characterized in that** the chlorosilane is a compound of the general formula
RₙSiCl₄₋ₙ
where
n may be 0-3 and where
R is hydrogen or monovalent, identical or different, substituted or unsubstituted organic radical.

5. Process according to one of Claims 1 to 4, **characterized in that** the alcohol is an alkanol or an ether oxygen-substituted alkanol having from 1 to 6 carbon atoms.

6. Process according to one of Claims 1 to 5, **characterized in that** the solvent used is an unreactive organic solvent, for example toluene or xylene.

7. Process according to one of Claims 1 to 6, **characterized in that** the reaction mixture is transferred into the column of a first reaction unit in which further mixing and reaction of chlorosilane, alcohols and optionally water is effected to give hydrogen chloride gas and a liquid crude product, and the liquid crude product is introduced continuously into a column used as a 2nd reaction unit, into whose lower third an alcohol is introduced.

## Revendications

1. Procédé de préparation en continu de composés contenant des groupes SiOC, dans lequel on fait réagir un mélange réactionnel, dans une première unité de réaction contenant une colonne, avec de l'alcool et le cas échéant de l'eau, pour obtenir un produit brut contenant encore des constituants volatils, et qui est transféré dans une deuxième unité de réaction contenant une colonne, dans laquelle on introduit encore de l'alcool et où il est débarrassé des constituants volatils le cas échéant en présence d'un solvant organique non réactif, et où le produit final souhaité est soutiré à l'extrémité inférieure de la deuxième unité de réaction, dans lequel procédé, dans un préréacteur, on fait partiellement réagir un chlorosilane avec de l'alcool et le cas échéant avec de l'eau pour obtenir un mélange réactionnel qui est introduit dans la première unité de réaction, et dans lequel le préréacteur consiste en une cuve d'agitation, un réacteur tubulaire ou un réacteur à circulation en boucle, et les première et deuxième unités de réaction consistent à chaque fois en une colonne avec évaporateur à circulation.

2. Procédé selon la revendication 1, **caractérisé en ce que** l'alcool et le cas échéant l'eau, que l'on utilise dans le préréacteur pour la réaction partielle du chlorosilane, comprend le produit de distillation de la deuxième unité de réaction, qui est recyclé dans le préréacteur sous forme liquide ou gazeuse.

3. Procédé selon la revendication 2, **caractérisé en ce que** le produit de distillation est mélangé à un complément d'eau et / ou d'alcool dans le préréacteur ou avant l'introduction dans le préréacteur.

4. Procédé selon l'une quelconque des revendications 1 à 3, **caractérisé en ce que** le chlorosilane est un composé de la formule générale
RₙSiCl₄₋ₙ
dans laquelle
n peut être égal à de 0 à 3 et dans laquelle R représente de l'hydrogène ou un radical organique monovalent, identique ou différent, substitué ou non substitué.

5. Procédé selon l'une quelconque des revendications 1 à 4, **caractérisé en ce que** l'alcool est un alcanol ou un alcanol substitué par un atome d'oxygène d'éther et comportant de 1 à 6 atomes de carbone.

6. Procédé selon l'une quelconque des revendications 1 à 5, **caractérisé en ce que** l'on met en oeuvre en tant que solvant un solvant organique non réactif, comme par exemple du toluène ou du xylène.

7. Procédé selon l'une quelconque des revendications 1 à 6, **caractérisé en ce que** le mélange réactionnel est transféré dans la colonne d'une première unité de réaction, dans laquelle se poursuivent le mélange et la réaction du chlorosilane, de l'alcool et le cas échéant de l'eau pour former de l'acide chlorhydrique gazeux et un produit brut liquide, et le produit brut liquide est introduit en continu dans une colonne utilisée comme 2^{ème} unité de réaction, et dans le tiers inférieur de laquelle on introduit un alcool.
